(19) Europäisches Patentamt
European Patent Office
Office européen des brevets

(11) **EP 2 583 216 B1**

(12) **EUROPEAN PATENT SPECIFICATION**

(45) Date of publication and mention
of the grant of the patent:
**13.09.2017 Bulletin 2017/37**

(51) Int Cl.:
***G06K 9/00*** *(2006.01)*

(21) Application number: **10727678.4**

(22) Date of filing: **17.06.2010**

(86) International application number:
**PCT/EP2010/003664**

(87) International publication number:
**WO 2011/157280 (22.12.2011 Gazette 2011/51)**

(54) **METHOD OF PREDETERMINED ROAD OBJECT RECOGNITION IN IMAGES AND VEHICLE DRIVING ASSISTANCE DEVICE**

VERFAHREN ZUR ERKENNUNG BESTIMMTER STRASSENOBJEKTE AUF BILDERN UND FAHRASSISTENT

PROCÉDÉ DE RECONNAISSANCE D'OBJETS ROUTIERS PRÉDÉTERMINÉS DANS DES IMAGES ET DISPOSITIF D'AIDE À LA CONDUITE DE VÉHICULES

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(43) Date of publication of application:
**24.04.2013 Bulletin 2013/17**

(73) Proprietor: **Valeo Schalter und Sensoren GmbH 74321 Bietigheim-Bissingen (DE)**

(72) Inventors:
• **REBUT, Julien**
**F-75019 Paris (FR)**
• **KUOCH, Siav, Kuong**
**F-94100 Saint Maur des Fosses (FR)**

(56) References cited:
• **PHILIP GEISMANN ET AL: "A two-staged approach to vision-based pedestrian recognition using Haar and HOG features", INTELLIGENT VEHICLES SYMPOSIUM, 2008 IEEE, IEEE, PISCATAWAY, NJ, USA, 4 June 2008 (2008-06-04), pages 554-559, XP031318793, ISBN: 978-1-4244-2568-6 cited in the application**

• **Schiele B et al.: "Kamerabasierte Fussgängerdetektion" In: Winner H et al.: "Handbuch Fahrerassistenzsysteme - Grundlagen, Komponenten und Systeme für aktive Sicherheit und Komfort", 2009, Vieweg+Teubner ¦ GWV Fachverlage GmBH, Wiesbaden, XP002615458, ISBN: 978-3-8348-0287-3 page 224 table 16-1; figure 16-5 page 228, column 2; figures 16-9 page 232, column 2 - page 233, column 1; figures 16-15**
• **Brunelli R: "Template Matching Techniques in Computer Vision - Theory and Practice", 2009, John Wiley & Sons Ltd, XP002615459, ISBN: 978-0-470-51706-2 pages 218-219, Intermezzo 10.2**
• **THEODORIDIS S ET AL: "Pattern Recognition, Feature Subset Selection", 1 January 1999 (1999-01-01), PATTERN RECOGNITION, ACADEMIC PRESS, SAN DIEGO, CALIFORNIA, USA, PAGE(S) 157 - 159, XP002606558, ISBN: 978-0-12-686140-2 chapter 5.6.2 Feature Vector Selection; page 159**
• **HAIQIANG ZUO ET AL: "Image spam filtering using Fourier-Mellin invariant features", ACOUSTICS, SPEECH AND SIGNAL PROCESSING, 2009. ICASSP 2009. IEEE INTERNATIONAL CONFERENCE ON, IEEE, PISCATAWAY, NJ, USA, 19 April 2009 (2009-04-19), pages 849-852, XP031459363, ISBN: 978-1-4244-2353-8**

EP 2 583 216 B1

## Description

The invention relates to a method of predetermined road object recognition in images of a scene acquired by a camera, in particular for a vehicle driving assistance device.

Detecting objects in images acquired by a camera remains a difficult task. As an example, detecting humans remains difficult because of the wide variability in human appearance, the wide range of poses that they can adopt and illumination conditions in the scene.

For driving assistance device, it may be important to recognize predetermined road objects such as pedestrians or vehicles, in order to avoid dangerous traffic situations.

A classical approach to recognize pedestrians in video sequences on board of a moving vehicle described in "A two-staged Approach to vision-based pedestrian recognition using Haar and HOG Features", 2008 IEEE Intelligent Vehicles Symposium, comprises two main stages : a first stage of detection where a fast search mechanism based on simple features is applied to detect person-like regions and a second stage of validation where a set of features on these regions classify them into pedestrian and non-pedestrian.

In the first stage of detection, regions which may contain pedestrians are generated. These regions are then passed on the second stage of validation where they are analyzed to confirm the presence of a pedestrian or discard the region if the classification is negative.

The first stage of detection is done by sliding a search window through the image and checking whether an image region at a certain location is classified as pedestrian or non-pedestrian. This first stage has a very high detection speed and achieves a good detection rate. However, the number of false detection is too high.

In the second stage of validation, the hypotheses are verified using different set of features as well as a different classifier. The extracted features are based on histograms of oriented gradients (HOG) that are computed over a grid of overlapping rectangular blocks in the search window. For each block, its histogram describes the frequency of the occurring gradient directions inside that block. HOG descriptor is for example described by Navneet Dalal and Bill Triggs, "Histogram of Oriented Gradient for Human Detection", French National Institute for Research in Computer Science and Control (INRIA)".

The extracted set of features is supplied to a classifier that output a score that describes the classification confidence. This second stage reduces false detection but not sufficiently and some false detection still remains. Classifying images based on Fourier-Mellin transformation (FMT) based descriptors which are robust to (inter alia) rotation is known, for example as disclosed in Zuo et al., "Image Spam Filtering Using Fourier-Mellin Invariant Features", Proceedings of the International Conference on Acoustics, Speech and Signal Processing, ICASSP 2009, p. 849-852, 2009. An object of the invention is to propose an improved method of predetermined road objects detection with a better quality of classification.

In a first aspect of the present invention, this object is achieved by a method of predetermined road object recognition in images, including:

- a first stage of detection, to detect a predetermined road object -like regions in images, done by sliding a search window through an image and checking whether an image region is classified as said predetermined road objector non-predetermined road object, and
- a second stage of validation, to classify said predetermined road object -like regions into predetermined road objects and non- predetermined road objects,

characterized in that in said second stage of validation, a vector comprising first descriptors computed inside said predetermined road object-like region from extracting features based on histogram of oriented gradients (HOG), and second descriptors from a Fourier-Mellin transformation (FMT) on the predetermined road object-like region pixels, is supplied to a classifier to classify said predetermined road object-like regions into predetermined road objects and non-predetermined road objects.

Thus, the method of predetermined road object recognition in images includes two stages of classification, a first stage faster than second one and second one being insensitive to rotation rendering said method able to recognize a predetermined road object without being impacted by possible camera distortions. The rejection of good candidates is thus reduced, so there are more good detections. Moreover, the combination of HOG and FMT descriptors in the validation stage reinforces the quality of the classification, reducing false alarms.

The Fourier-Mellin transformation (FMT) may comprise a step of variable selection to select the most significant descriptors.

In said second stage of validation, said classifier may be a support vector machine classifier (SVM).

In said first stage of detection, the image region may be classified as said predetermined road object applying a set of detectors such as "Adaboost" algorithm, said set of detectors being faster than classification of said second stage of validation.

Said predetermined road objects are for example pedestrians or vehicles.

The invention also relates to a vehicle driving assistance device comprising:

- a camera for being mounted onboard a vehicle, and
- processing means configured to capture images from said camera,

characterized in that the processing means are further configured to implement a method of predetermined road object recognition in images as previously described.

Other features and advantages of the invention will become apparent from the following description of a non-limited example and enclosed drawings.

For a better understanding of the invention with regard to the embodiments thereof, reference is made to the accompanying drawings, in which like numerals designate corresponding elements or sections throughout, and in which:

- Figure 1 is a flowchart of a method of pedestrian recognition in images,
- Figure 2 is a representation of a first object during a Fourier-Mellin transformation,
- Figure 3 is a representation of a second object during a Fourier-Mellin transformation,
- Figure 4 is a representation of a third object during a Fourier-Mellin transformation, and
- Figure 5 is a representation of a fourth object during a Fourier-Mellin transformation.

The vehicle driving assistance device comprises a camera mounted onboard a motor vehicle. The camera takes successive images of the road, for example backwards of the vehicle. As used herein, the term "camera" is used to designate any device for acquiring images of the camera type (more particularly the CCD ("charge coupling sensor"s) or CMOS (Complementary Metal Oxide Semiconductor) type) or photosensitive sensor, for example a black and white sensor or a color sensor. The camera is generally sensitive in the visible range and/or in the infrared range, in particular in the near infrared.

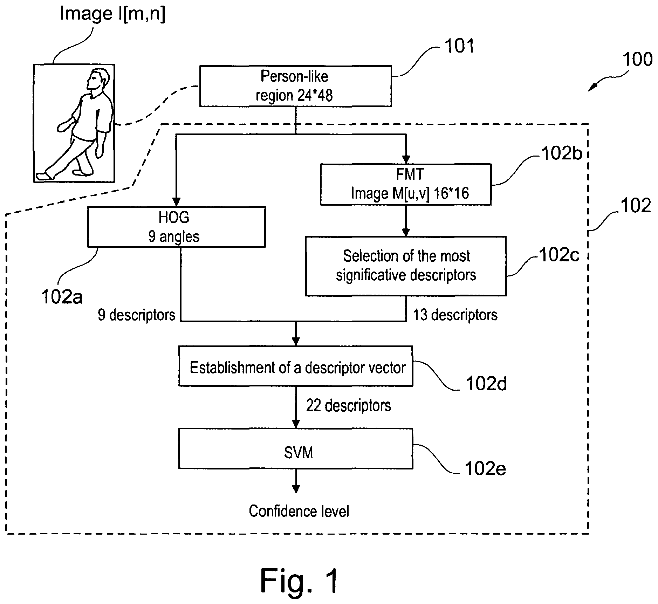

The vehicle driving assistance device comprises also processing means configured to capture images from said camera and configured to implement a method of predetermined road object recognition in images 100 (figure 1).

Said predetermined road object is for example a pedestrian or a vehicle.

Said method of predetermined road object recognition is described in the example hereafter as a method of pedestrian recognition in images 100.

This method of pedestrian recognition in images 100 includes two stages: a first stage of detection 101 and a second stage of validation 102.

In the first stage of detection 101, the method of pedestrian recognition 100 detects person-like regions in images captured by the camera, done by sliding a search window through the image and checking whether an image region is classified as pedestrian or non-pedestrian.

The search window can have a variable size sliding trough a pyramid of rescaled images.

The check of image region classified as pedestrian or non-pedestrian is done applying a set of detectors, such as "Adaboost" algorithm using for example "Haar" feature. Different type of detectors may be used; the only constraint is to have a first stage of detection 101 faster than the second stage of validation 102. In order to ensure a fast classification, the first stage of detection focuses on a set of simple features, for example, by doing a pixel comparison.

The output is a person-like region (Image I[m,n]) which is a region of the image that may contain a pedestrian. Thus, a fast search based on simple features is applied to detect person-like regions which may contain pedestrians. This first stage of detection 101 has a very high detection speed and achieves a good detection rate.

These person-like regions are then passed on the second stage of validation 102 where they are analyzed to confirm the presence of a pedestrian or discard the person-like regions if the classification is negative. The second stage of validation 102 verifies the hypotheses made in the first stage of detection 101 using different set of features as well as different classifier.

In this second stage of validation 102, first descriptors are computed inside said person-like region from extracting features based on histogram of oriented gradients (block 102a).

Histogram of oriented gradient (HOG) descriptors counts occurrences of gradient orientation in localized portions of the person-like regions. Local object appearance and shape within an image can be described by the distribution of intensity gradients or edge directions. The implementation of these descriptors can be achieved by dividing the image into small connected regions, called cells (C cells), and for each cell compiling a histogram of gradient directions or edge orientations for the pixels within the cell.

More precisely, a gradient for each pixel of the person-like region Image I[m,n] is first determined.

Then, for each cell, gradients orientations are sorted into n, the number of bins (or angle) of a histogram of gradients (HoG). Histograms with nine direction bins (ranging from 0° to 180° with a step size of 20°) is well appropriate for pedestrian classification. For each cell, its histogram describes the frequency of the occurring gradient directions inside that cell.

The output of the Histogram of oriented gradient (HOG) is a vector of first descriptors of n by C data with n, the number of bins and C, the number of cells.

For example, if the person-like region is divided in six cells corresponding to the head, the two arms, the trunk and the two legs, the Histogram of oriented gradient outputs a vector of 54 descriptors (with nine bins). The descriptors define the arrangement of the cells features inside the person-like region and thus have a strong impact on classification performance.

In said second stage of validation 102, second descriptors from a Fourier-Mellin transformation (TFM) on the person-like region pixels are also computed from the person-like region (block 102b).

The Fourier-Mellin transformation is a series of three consecutives operations including firstly, a Fourier transformation (1) secondly, a Log-Polar transformation (2), and thirdly, a second Fourier transformation (3).

$$F[k,l] = | FFT(Image\ I[m,n]) | \qquad (1)$$

$$L[rho,theta] = LogPol(F[k,l]) \qquad (2)$$

The Log-Polar transformation is a conformal mapping from the points on the Cartesian plane (m,n) to points in the Log-Polar plane (rho, theta).

$$M[u,v] = FFT(L([rho, theta]) \qquad (3)$$

The output of the Fourier-Mellin transformation is an image (Image M[u, v]).

The pixels of said image Image M[u,v] establish the second descriptors that will also impact on classification performance.

According to the resolution, the pixels number of the image Image M[u,v] can be reduced compared to the person-like region Image I[m,n].

According to another embodiment, the output of the Fourier-Mellin transformation comprises a step of variable selection 102c to select the most significant descriptors. For example, this step of variable selection 102c is performing once using a classifier as a support vector machine (SVM). The SVM outputs a score that describes the classification confidence. A predefined number of descriptors, thirteen for example, which obtain the best score to classify a pedestrian, are selected.

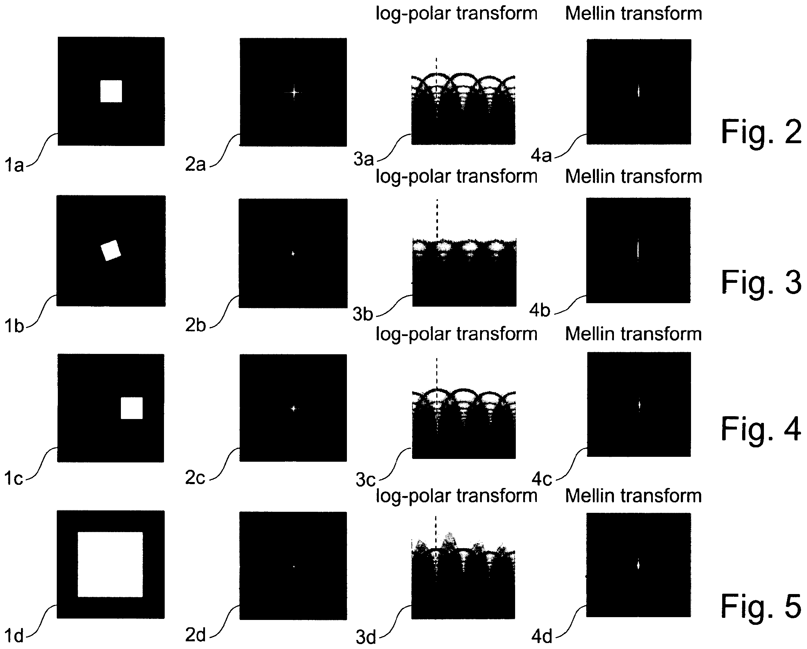

Figures 2, 3, 4 and 5 illustrate examples of the Fourier-Mellin transformation on an object in different position or size. To facilitate understanding, the object is schematized by a square.

Picture 1a of figure 2 represents a first object. Picture 2a of figure 2 represents this same object after a Fourier transformation in a frequency domain (k, l). Picture 3a represents this same object after a Log-Polar transformation in a Log-Polar domain (rho, theta) done after the Fourier transformation. Picture 4a represents this object after a second Fourier transformation in a frequency domain (u,v) i.e. after the whole Fourier-Mellin transformation.

Picture 1b of figure 3 represents a second object. This second object corresponds to the first object of picture 1a which has turned about 20°. As we can see on picture 2b, the Fourier transformation representation has also turned about 20°, which is transposed by a translation in the Log-Polar graduation (picture 3b). After the Fourier-Mellin transformation, the representation of the object on picture 4b is the same than in picture 4a. As Fourier transformation is translation invariant, the rotation becoming a translation in LogPolar domain is finally cancelled in the last Fourier transformation. Thus, the rotation of the object doesn't change the descriptors that will be the same for the first and the second object. Thus, first and second object will be classified as square.

Picture 1c of figure 4 represents a third object. This third object corresponds to the first object of picture 1a which has been translated on the right. After the Fourier transformation, the representation of the object on picture 2c is the same than in picture 2a, and thus, after the Fourier-Mellin transformation in picture 4c, the representation is the same than in picture 4a. As the translated object is defined by the same characteristic than the first object, the translation of the object doesn't change the descriptor. Thus, first, second and third object will be classified as square with the same descriptors.

Picture 1d of figure 5 represents a fourth object. This fourth object corresponds to picture 1a first object with a higher size. After the Fourier transformation, the representation of the object on picture 2d is the same than in picture 2a, and thus, after the Fourier-Mellin transformation in picture 4d, the representation is the same than in picture 4a. As the size of the fourth object is defined by the same characteristic than the first object, the size of the object doesn't change the descriptor. Thus, first, second, third and fourth object will be classified as square with the same descriptors.

The result is an image which is invariant in rotation, translation and scaling, allowing the method of pedestrian detection 100 to detect pedestrians in any position or about any size. Even if be invariant in translation or scaling is not the most important result obtained as the search window can have a variable size sliding trough a pyramid of rescaled images, be invariant against rotation allows not being sensitive to the camera distortion which can represent a pedestrian straight in the middle of the image and sloping on sides.

As can be seen in figure 1 then, in a following step 102d of said second stage of validation 102, a vector comprising both first descriptors computed inside said person-like region from extracting features based on histogram of oriented gradients (HOG) and second descriptors from a Fourier-Mellin transformation (FMT) on the person-like region pixels, is established.

In the example described in figure 1, this vector comprises nine first descriptors with only one cell (or a vector of 6*9 descriptors with an image divided into 6 cells as previously described) and thirteen second descriptors, that is to say twenty-two descriptors.

In a last step 102e of said second stage of validation 102, this vector of first and second descriptors is supplied to a classifier to classify person-like regions into pedestrians and non-pedestrian.

For example, the classifier is a support vector machine classifier (SVM). The SVM outputs a score that describes the classification confidence to determine whether the person-like region includes a human or not.

Thus, the method of predetermined road object recognition in images includes two stages of classification, a first stage 101 faster than second one 102 and second one 102 being insensitive to rotation rendering the method of pedestrian detection able to detect a pedestrian without being impacted by possible camera distortions. The rejection of good candidates is thus reduced, so there are more good detections. Moreover, the combination of HOG and FMT descriptors in the validation stage 102 reinforces the quality of the classification, reducing false alarms.

## Claims

1. Method of predetermined road object recognition in images, including :

    - a first stage of detection (101), to detect predetermined road object-like regions in images, done by sliding a search window through an image and checking whether an image region is classified as said predetermined road object or non-predetermined road object, and
    - a second stage of validation (102), to classify said predetermined road object -like regions into predetermined road objects and non-predetermined road objects,

    **characterized in that** in said second stage of validation (102), a vector comprising first descriptors computed inside said predetermined road object-like region from extracting features based on histogram of oriented gradients (HOG), and second descriptors from a Fourier-Mellin transformation (FMT) on the predetermined road object-like region pixels, is supplied to a classifier to classify said predetermined road object -like regions into predetermined road objects and non- predetermined road objects.

2. Method of predetermined road object recognition in images according to claim 1, **characterized in that** the Fourier-Mellin transformation (FMT) comprises a step of variable selection to select the most significant descriptors (102c).

3. Method of predetermined road object recognition in images according to claim 1 or 2, **characterized in that** in said second stage of validation (102), said classifier is a support vector machine classifier (SVM).

4. Method of predetermined road object recognition in images according to one of claims 1 to 3, **characterized in that** in said first stage of detection (101), the image region is classified as said predetermined road object applying a set of detectors

5. Method of predetermined road object recognition in images according to claim 4, **characterized in that** said set of detectors uses « Adaboost » algorithm.

6. Method of predetermined road object recognition in images according to one of claims 1 to 5, **characterized in that** said predetermined road object is a pedestrian.

7. Method of predetermined road object recognition in images according to one of claims 1 to 5, **characterized in that** said predetermined road object is a vehicle.

**8.** Vehicle driving assistance device comprising :

- a camera for being mounted onboard a vehicle, and
- processing means configured to capture images from said camera,

**characterized in that** the processing means are further configured to implement a method of predetermined road object recognition in images according to one of claims 1 to 7.

## Patentansprüche

**1.** Verfahren zum Erkennen von im Voraus bestimmten Straßenobjekten in Bildern, enthaltend:

- eine erste Stufe der Detektion (101) zum Erkennen von im Voraus bestimmten Straßenobjekt-ähnlichen Regionen in Bildern, durchgeführt durch Verschieben eines Suchfensters durch ein Bild und Prüfen, ob eine Bildregion als das im Voraus bestimmte Straßenobjekt oder ein nicht im Voraus bestimmtes Straßenobjekt klassifiziert wird, und
- eine zweite Stufe der Validierung (102) zum Klassifizieren der im Voraus bestimmten Straßenobjekt-ähnlichen Regionen in im Voraus bestimmte Straßenobjekte und nicht im Voraus bestimmte Straßenobjekte,

**dadurch gekennzeichnet, dass** in der zweiten Stufe der Validierung (102) ein Vektor, umfassend erste Deskriptoren, berechnet in der im Voraus bestimmten Straßenobjekt-ähnlichen Region aus Extrahieren von Merkmalen basierend auf Histogrammen von ausgerichteten Gradienten (HOG), und zweite Deskriptoren aus einer Fourier-Mellin-Transformation (FMT) an den Bildpunkten der im Voraus bestimmten Straßenobjekt-ähnlichen Region, einer Klassifizierungsvorrichtung zugeführt wird, um die im Voraus bestimmten Straßenobjekt-ähnlichen Regionen in im Voraus bestimmte Straßenobjekte und nicht im Voraus bestimmte Straßenobjekte zu klassifizieren.

**2.** Verfahren zum Erkennen von im Voraus bestimmten Straßenobjekten in Bildern nach Anspruch 1, **dadurch gekennzeichnet, dass** die Fourier-Mellin-Transformation (FMT) einen Schritt der Variablenauswahl zum Auswählen der bedeutsamsten Deskriptoren (102c) umfasst.

**3.** Verfahren zum Erkennen von im Voraus bestimmten Straßenobjekten in Bildern nach Anspruch 1 oder 2, **dadurch gekennzeichnet, dass** in der zweiten Stufe der Validierung (102) die Klassifizierungsvorrichtung eine Stützvektormaschinen-Klassifizierungsvorrichtung (SVM) ist.

**4.** Verfahren zum Erkennen von im Voraus bestimmten Straßenobjekten in Bildern nach einem der Ansprüche 1 bis 3, **dadurch gekennzeichnet, dass** in der ersten Stufe der Detektion (101) die Bildregion unter Anwendung einer Menge von Detektoren als das im Voraus bestimmte Straßenobjekt klassifiziert wird.

**5.** Verfahren zum Erkennen von im Voraus bestimmten Straßenobjekten in Bildern nach Anspruch 4, **dadurch gekennzeichnet, dass** die Menge von Detektoren einen "Adaboost"-Algorithmus verwendet.

**6.** Verfahren zum Erkennen von im Voraus bestimmten Straßenobjekten in Bildern nach einem der Ansprüche 1 bis 5, **dadurch gekennzeichnet, dass** das im Voraus bestimmte Straßenobjekt ein Fußgänger ist.

**7.** Verfahren zum Erkennen von im Voraus bestimmten Straßenobjekten in Bildern nach einem der Ansprüche 1 bis 5, **dadurch gekennzeichnet, dass** das im Voraus bestimmte Straßenobjekt ein Fahrzeug ist.

**8.** Fahrzeug-Fahrassistenzvorrichtung, umfassend:

- eine Kamera, um an Bord eines Fahrzeugs montiert zu werden, und
- Verarbeitungsmittel, konfiguriert zum Erfassen von Bildern von der Kamera,

**dadurch gekennzeichnet, dass** die Verarbeitungsmittel ferner konfiguriert sind zum Implementieren eines Verfahrens zum Erkennen von im Voraus bestimmten Straßenobjekten in Bildern nach einem der Ansprüche 1 bis 7.

**EP 2 583 216 B1**

**Revendications**

1. Procédé de reconnaissance d'objets routiers prédéterminés dans des images, comprenant les étapes suivantes :

   - une première étape de détection (101), pour détecter des régions ressemblant à des objets routiers prédéterminés dans des images, exécutée en faisant glisser une fenêtre de recherche sur une image et en vérifiant si une région d'image est classée en tant que dit objet routier prédéterminé ou objet routier non prédéterminé, et
   - une seconde étape de validation (102), pour classer lesdites régions ressemblant à des objets routiers prédéterminés dans des objets routiers prédéterminés et des objets routiers non prédéterminés, **caractérisé en ce que** dans ladite seconde étape de validation (102), un vecteur comprenant des premiers descripteurs calculés à l'intérieur de ladite région ressemblant à un objet routier prédéterminé à partir de caractéristiques d'extraction basées sur un histogramme de gradients orientés (HOG) et des seconds descripteurs provenant d'une transformation de Fourier-Mellin (FMT) sur les pixels de la région ressemblant à un objet routier prédéterminé, est fourni à un classificateur pour classer lesdites régions ressemblant à des objets routiers prédéterminés en objets routiers prédéterminés et objets routiers non prédéterminés.

2. Procédé de reconnaissance d'objets routiers prédéterminés dans des images selon la revendication 1, **caractérisé en ce que** la transformation de Fourier-Mellin (FMT) comprend une étape de sélection variable pour sélectionner les descripteurs les plus significatifs (102c).

3. Procédé de reconnaissance d'objets routiers prédéterminés dans des images selon la revendication 1 ou la revendication 2, **caractérisé en ce que**, dans ladite deuxième étape de validation (102), ledit classificateur est un classificateur de machine à vecteurs de support (SVM).

4. Procédé de reconnaissance d'objets routiers prédéterminés dans des images selon l'une des revendications 1 à 3, **caractérisé en ce que**, dans ladite première étape de détection (101), la région d'image est classée en tant que dit objet routier prédéterminé appliquant un ensemble de détecteurs.

5. Procédé de reconnaissance d'objets routiers prédéterminés dans des images selon la revendication 4, **caractérisé en ce que** ledit ensemble de détecteurs utilise un algorithme « Adaboost ».

6. Procédé de reconnaissance d'objets routiers prédéterminés dans des images selon l'une des revendications 1 à 5, **caractérisé en ce que** ledit objet routier prédéterminé est un piéton.

7. Procédé de reconnaissance d'objets routiers prédéterminés dans des images selon l'une des revendications 1 à 5, **caractérisé en ce que** ledit objet routier prédéterminé est un véhicule.

8. Dispositif d'aide à la conduite de véhicule comprenant :

   - une caméra destinée à être montée à l'avant d'un véhicule, et
   - des moyens de traitement configurés pour capturer des images saisies par ladite caméra,

   **caractérisé en ce que** les moyens de traitement sont en outre configurés pour mettre en oeuvre un procédé de reconnaissance d'objets routiers prédéterminés dans des images selon l'une des revendications 1 à 7.

Fig. 1

Fig. 2 — Fig. 3 — Fig. 4 — Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- A two-staged Approach to vision-based pedestrian recognition using Haar and HOG Features. *IEEE Intelligent Vehicles Symposium,* 2008
- **NAVNEET DALAL ; BILL TRIGGS.** Histogram of Oriented Gradient for Human Detection. *French National Institute for Research in Computer Science and Control*
- **ZUO et al.** Image Spam Filtering Using Fourier-Mellin Invariant Features. *Proceedings of the International Conference on Acoustics, Speech and Signal Processing, ICASSP 2009,* 2009, 849-852